# EUROPÄISCHE PATENTANMELDUNG

(11) **EP 3 318 869 A1**
(43) Veröffentlichungstag der Anmeldung: **09.05.2018**
(21) Anmeldenummer: 17199923.8
(22) Anmeldetag: 03.11.2017
(51) Int. Cl.: G01N 29/04, G01N 29/06, G01N 29/34

(54) **VERFAHREN ZUR ZERSTÖRUNGSFREIEN PRÜFUNG EINER DÜNNWANDIGEN STRUKTUR AUF BASIS EINER TOMOGRAPHISCHEN ULTRASCHALLWELLENANALYSE**

(30) Priorität: 07.11.2016 DE 102016221739
(71) Anmelder: Fraunhofer-Gesellschaft zur Förderung der angewandten Forschung e.V., 80686 München (DE)
(72) Erfinder: JÄCKEL, Patrick, 66583 Spiesen-Elversberg (DE)
(74) Vertreter: Rösler, Uwe

(57) **Zusammenfassung**

Beschrieben wird ein Verfahren zur zerstörungsfreien Prüfung einer dünnwandigen Struktur auf Basis einer tomographischen Ultraschallwellenanalyse, bei dem an die dünnwandige Struktur zwei Ultraschallwandler-Arrays in einem Abstand zueinander zum Aussenden und Empfangen von geführten Ultraschallwellen längs der dünnwandigen Struktur angeordnet werden und mit denen die Struktur durchschallt und transmittierende Ultraschallwellenanteile erfasst werden, auf deren Grundlage eine Prüfinformation von der dünnwandigen Struktur rekonstruiert wird.

Das Verfahren zeichnet sich dadurch aus, dass in einem ersten Durchschallungsvorgang die Struktur mit geführten Ultraschallwellen wenigstens einer ersten Art durchschallt wird und die Struktur transmittierende und/oder in der Struktur reflektierende Ultraschallwellenanteile bezüglich ihrer Phasen- und Gruppengeschwindigkeiten und/oder Amplitude detektiert werden. In einem zweiten Durchschallungsvorgang wird die Struktur mit geführten Ultraschallwellen wenigstens einer zweiten Art durchschallt, wobei die Struktur transmittierende und/oder in der Struktur reflektierende Ultraschallwellenanteilen bezüglich ihrer Phasen- und Gruppengeschwindigkeiten und/oder Amplitude detektiert werden. Im Weiteren werden die Phasen- und Gruppengeschwindigkeiten und/oder Amplituden der detektierten Ultraschallwellenanteile der geführten Ultraschallwellen erster und zweiter Art der Rekonstruktion zugrunde gelegt, wobei sich die geführten Ultraschallwellen der ersten und zweiten Art in wenigstens zwei der nachfolgenden Eigenschaften unterscheiden: Wellenlänge, Frequenz, Wellentyp, Wellenmode.

## Beschreibung

### Technisches Gebiet

Die Erfindung bezieht sich auf ein Verfahren zur zerstörungsfreien Prüfung einer dünnwandigen Struktur auf Basis einer tomographischen Ultraschallwellenanalyse, bei dem an die dünnwandige Struktur zwei Ultraschallwandler-Arrays in einem Abstand zueinander zum Aussenden und Empfangen von geführten Ultraschallwellen längs der dünnwandigen Struktur angeordnet werden und mit denen die Struktur durchschallt und transmittierende Ultraschallwellenanteile erfasst werden, auf deren Grundlage eine Prüfinformation von der dünnwandigen Struktur rekonstruiert wird.

Sicherheitsrelevante Infrastrukturen, wie bspw. Rohrleitungen in chemischen und petrochemischen Anlagen, Versorgungsleitungen für Gas und Wasser sowie auch tragende Konstruktionen, wie Stützpfeiler und Pfosten, sind äußeren Umwelteinflüssen ausgesetzt und unterliegen der Gefahr von Materialdegradierungen, bspw. in Form von Korrosion, insbesondere im Falle mangelnder oder fehlerhafter Isolierung. Aus diesem Grunde sind regelmäßige Inspektionen und Wartungen derartiger Strukturen erforderlich.

Häufig sind jedoch vollumfassende Zustandsüberprüfungen an derartigen Strukturen nicht möglich, da für Sichtprüfungen und häufig auch für technische Untersuchungsmethoden die Strukturbereiche unzugänglich sind, wodurch ein Erkennen und Beurteilen von möglichen Schädigungen schwierig bzw. unmöglich werden. Darüber hinaus resultieren korrosionsbedingte Oberflächenschädigungen meist in flächigen, geometrisch oft komplexen und weniger tiefenbetonten Schadstellen, zu deren Detektion die kommerziell verfügbaren Messverfahren an ihre Auflösungsgrenzen stoßen, so dass keine zufriedenstellenden Aussagen über den tatsächlichen Schädigungszustand getroffen werden können.

### Stand der Technik

Die meisten kommerziell im Einsatz befindlichen, zerstörungsfreien Prüftechniken, die auf der Einkopplung von Ultraschallwellen sowie deren Detektion und Auswertung beruhen, vermögen lediglich Prüfaussagen über das bloße Vorhanden- oder Nichtvorhandensein von Fehlern im jeweiligen Prüfobjekt zu treffen.

Erste Ansätze von zerstörungsfreien Prüfsystemen, mit denen eine quantitative geometrische bzw. räumliche Erfassung und entsprechende Vermassung von Prüfobjektschädigungen möglich werden, sind Gegenstand der derzeitigen Entwicklung und in Form wissenschaftlicher Laboraufbauten realisiert.

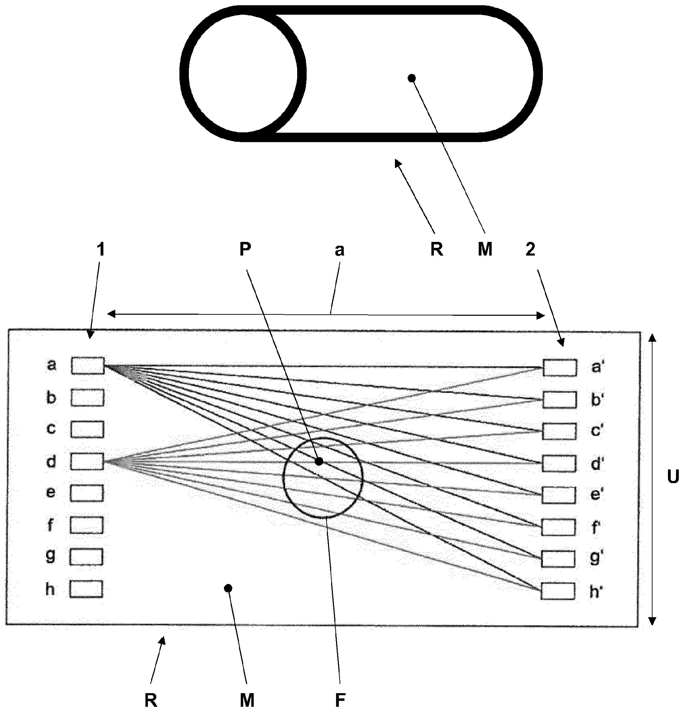

Aus einem Artikel von R. L. Royer Jr., J. van Velsor, J. L. Rose, "An Ultrasonic Guided Wave Tomography Approach for Pipeline Health Monitoring", ASME 2008, Conference on Smart Materials, Smart Materials, Adaptive Structures and Intelligent Systems, Vol. 2, Ellicott City, Maryland, USA, October 28 - 30, 2008, ist ein zerstörungsfreies Prüfverfahren zu entnehmen, das auf der Grundlage geführter Ultraschallwellen Materialdegradationen längs einer dünnwandigen Rohrleitung qualitativ sowie auch quantitativ zu detektieren vermag. Die Rohrleitung wird hierzu mittels geführter Ultraschallwellen im Wege einer Transmissionsmessung durchschallt. Die hierbei auftretende Wechselwirkung zwischen den Ultraschallwellen und den längs der Rohrleitung vorhandenen Materialdegradationen führt dazu, dass sich sowohl die Phasen- als auch die Gruppengeschwindigkeit der sich dispersiv ausbreitenden Ultraschallwellen in Abhängigkeit der Wanddicke der Rohrleitung ändern. Um neben der reinen Schadstellendetektion auch eine Schadstellenvermassung vornehmen zu können, wird zu Zwecken einer numerischen Fehlerrekonstruktion auf ein Konzept zurückgegriffen, das aus der Literatur unter dem Namen "Guided Wave Tomography" bekannt ist. Dabei wird die innere räumliche Struktur eines zu untersuchenden Prüfobjektes durch Analyse und Zusammenschau einer Vielzahl einzelner Schnittbilder ermittelt wird. Zur Ermittlung einzelner Schnittbilder werden in einem axialen Abstand längs der dünnwandigen Rohrleitung zwei lineare Ultraschallwandler-Arrays angeordnet, die jeweils in Umfangsrichtung um die Rohrleitung eine Vielzahl einzelner Ultraschallwandler umfassen. In der einzigen Figur ist eine prinzipielle Anordnung zweier Ultraschallwandler-Arrays 1, 2, gezeigt, die jeweils eine Vielzahl von Ultraschallwandlern a - h bzw. a' - h' umfassen, die jeweils linear ringförmig um den Umfangsrand U einer Rohrleitung R angebracht sind. Nur zur leichteren Illustration ist die Mantelfläche M der Rohrleitung R in Figur 2 in einer zweidimensionalen Abwicklung dargestellt. U kennzeichnet die Umfangsrichtung, a die Längsachse bzw. den axialen Abstand beider Ultraschallwandler-Arrays 1, 2 auf der Mantelfläche M der Rohrleitung R. Es sei ferner angenommen, dass zwischen beiden Ultraschallwandler-Arrays 1, 2 eine Fehlstelle F vorhanden ist.

Zur quantitativen Erfassung der Fehlstelle F innerhalb der Wand der Rohrleitung R werden die Ultraschallwandler a - h des ersten Ultraschallwandler-Arrays 1 sequentiell hintereinander oder gleichzeitig oder in einer anderen zeitlichen Abfolge zur Erzeugung geführter Ultraschallwellen, bspw. in Form von Lambwellen oder geführten SH-Wellen oder Rayleighwellen aktiviert, wobei deren Wellenlänge viel größer ist als die Wanddicke der Rohrleitung R. Die seitens des ersten Ultraschallwellen-Arrays 1 emittierten Ultraschallwellen werden nach der Transmissionsstrecke, die dem axialen Abstand a entspricht, von den Ultraschallwandlern a' - h' des zweiten Ultraschallwellen-Arrays 2 detektiert.

Am Beispiel der von Seiten der Ultraschallwandler a und d emittierten geführten Ultraschallwellen sei das Prinzip der vorstehend bezeichneten "Guided Wave Tomography" erläutert:
Die von Seiten des Ultraschallwandlers a emittierten, geführten Ultraschallwellen werden von sämtlichen Ultraschallwandlern a' - h' des zweiten Ultraschallwandler-Arrays 2 empfangen. Gleichfalls empfangen die Ultraschallwandler a' - h' sämtliche transmittierten Ultraschallwellen von allen übrigen Ultraschallwandlern des ersten Ultraschallwandler-Arrays 1, so bspw. auch jene, die vom Ultraschallwandler d emittiert werden. Somit durchstrahlen aus unterschiedlichen Richtungen geführte Ultraschallwellen identische Positionen innerhalb der Rohrleitung R, wobei jede einzelne Schallwelle eine individuelle, vom jeweiligen Transmissionsweg abhängige Dämpfung der Ultraschallamplitude erfährt. Bspw. wird der in der Figur repräsentativ eingezeichnete Raumpunkt P innerhalb des Fehlers F sowohl von der seitens des Ultraschallwandlers a emittierten Ultraschallwelle durchschallt, die vom Ultraschallwandler g' empfangen wird, als auch von der seitens des Ultraschallwandlers d emittierten Schallwelle, die vom Ultraschallwandler d' empfangen wird. Somit liegt eine Vielzahl von Informationen über einzelne Raumpunkte innerhalb der zu untersuchenden Rohrleitung R vor, so dass eine Rekonstruktion des gesamten, von den Ultraschallwellen durchschallten Wandvolumens der Rohrleitung möglich wird, ähnlich der aus der Medizin bekannten Computertomographie-Technik.

Der computertomographiegestützten Rekonstruktion eines im Wege einer Ultraschalltransmissionsmessung erfassten Strukturvolumens, liegen wenigstens die messtechnisch erfassten Ultraschallamplituden der mittels des zweiten Ultraschallwandler-Arrays detektierten transmittierten Ultraschallwellenanteile, die über die Dämpfungseigenschaften des durchschallten Messvolumens Aufschluss geben, zugrunde.

Zusätzlich ist Literatur bekannt, dass Laufzeitänderungen aufgrund modendispersiver Prozesse zur Auswertung und Rekonstruktion verwendet werden.

Der Druckschrift CN 105 044 212 A1 ist ein Verfahren zur Fehleranalyse mittels tomographischer Ultraschallwellenanalyse zu entnehmen, bei dem ein Prüfbereich einer Probe mit einer Vielzahl von Ultraschallwandlern durchschallt und mit einer entsprechenden Vielzahl von Ultraschallwandlern detektiert wird, wobei der Prüfbereich mit jeweils zwei unterschiedlichen Lamb-Wellenmoden durchschallt wird, nämlich mit A0- und S0-Lambwellen. Zur Fehleranalyse werden beide detektierten Ultraschallwellenfeldsignale herangezogen.

Die Druckschrift DE 10 2008 002 394 A1 offenbart einen universellen Prüfkopf zur zerstörungsfreien Ultraschallwellenuntersuchung, der eine Vielzahl jeweils in Kreisringsektoren angeordnete Ultraschallwandlersegmente besitzt, von denen jeweils in Kreissegmente zusammengefasste Ultraschallwandler entweder als Ultraschallsender oder als Ultraschallempfänger dienen. Beim Betrieb schallen die Ultraschallsender Oberflächenwellen in ein zu untersuchendes Werkstück ein, die jeweils von den diametral gegenüberliegenden, als Ultraschallempfänger dienenden Ultraschallwandler empfangen werden. Um Ultraschallwellen aus mehreren Kreissektoren in ein Werkstück abzuschallen, werden diese jeweils mit unterschiedlichen Ultraschallfrequenzen angesteuert. Die Verwendung unterschiedlicher Frequenzen dient der Zuordnung der jeweils zeitlich empfangenen Ultraschallwellen zu den entsprechenden Ultraschallsendern.

Mithin besteht nach wie vor das Problem, dass die bisher bekannten auf der tomographischen Rekonstruktionstechnik basierenden zerstörungsfreien Prüfverfahren unter Nutzung geführter US-Wellen lediglich eine begrenzte Genauigkeit besitzen und zudem eine ungefähre Kenntnis über die Art und die Position jeweiliger Fehler voraussetzen, um eine passende Messkonfiguration zur Prüfung passend einstellen bzw. vornehmen zu können.

### Darstellung der Erfindung

Der Erfindung liegt die Aufgabe zugrunde ein Verfahren zur zerstörungsfreien Prüfung einer dünnwandigen Struktur auf Basis einer tomographischen Ultraschallwellenanalyse, bei dem an die dünnwandige Struktur zwei Ultraschallwandler-Arrays in einem Abstand zueinander zum Aussenden und Empfangen von geführten Ultraschallwellen längs der dünnwandigen Struktur angeordnet werden und mit denen die Struktur durchschallt und zumindest transmittierende Ultraschallwellenanteile erfasst werden, auf deren Grundlage eine Prüfinformation von der dünnwandigen Struktur rekonstruiert wird, derart weiterzubilden, so dass eine signifikante Verbesserung der Messgenauigkeit erhalten werden soll, mit der die räumliche Geometrie und Art von in der Struktur vorhandenen Fehlern bestimmbar sind. Zudem gilt es das Verfahren bedienerfreundlicher zu gestalten, so dass keine Vorkenntnisse über möglicherweise vorhandene Fehler innerhalb der zu prüfenden Struktur vorausgesetzt werden müssen, um entsprechende, bisher erforderliche Messsystemkonfigurationen vornehmen zu können.

Die Lösung der der Erfindung zugrunde liegenden Aufgabe ist im Anspruch 1 angegeben. Den Erfindungsgedanken in vorteilhafter Weise weiterbildende Merkmale sind in den Unteransprüchen sowie der weiteren Beschreibung zu entnehmen.

Das lösungsgemäße Verfahren ermöglicht eine quantitative zerstörungsfreie Prüfung von Strukturen, Komponenten und Bauteilen, die über große Dimensionen verfügen und längs der Fehler in beliebiger Art, Komplexität und Größe enthalten sein können, die insbesondere für eine unmittelbare Sichtprüfung oder für eine technische Kontaktprüfung nicht zugänglich sind. Überdies ist es möglich mit dem lösungsgemäßen Verfahren Fehler mit beliebig komplizierten Fehlergeometrien sowie auch nur geringfügigen geometrischen Ausprägung, bspw. in Form von geringfügigen Wanddickenvariationen, messtechnisch exakt sowohl zu lokalisieren als auch größenmäßig abzubilden.

Das lösungsgemäße Verfahren zur zerstörungsfreien Prüfung einer dünnwandigen Struktur auf Basis einer tomographischen Ultraschallwellenanalyse zeichnet sich durch die folgenden Verfahrensschritte aus:
In einem ersten Durchschallungsvorgang wird die zu untersuchende Struktur mit geführten Ultraschallwellen wenigstens einer ersten Art durchschallt, wobei die Struktur transmittierende und/oder in der Struktur reflektierende Ultraschallwellenanteile detektiert werden hinsichtlich ihrer Phasen- und Gruppengeschwindigkeiten und/oder ihrer Amplituden.

Nachfolgend wird in einem zweiten Durchschallungsvorgang die Struktur mit geführten Ultraschallwellen wenigstens einer zweiten Art durchschallt, wobei die Struktur transmittierende und/oder in der Struktur reflektierende Ultraschallwellenanteile detektiert werden, bezügliche ihrer Phasen- und Gruppengeschwindigkeiten und/oder ihrer Amplituden. Wesentlich ist, dass sich die geführten Ultraschallwellen der wenigstens ersten und zweiten Art in wenigstens zwei, vorzugsweise drei oder allen der nachfolgenden Eigenschaften unterscheiden, nämlich hinsichtlich ihrer Wellenlänge, ihrer Frequenz, ihres Wellentypes und/oder ihrer Wellenmode. Der Rekonstruktion werden die Phasen- und Gruppengeschwindigkeiten und/oder die Amplituden der detektieren Ultraschallwellenanteile der geführten Ultraschallwellen erster und zweiter Art zugrunde gelegt.

Zur Durchführung des lösungsgemäßen Verfahrens dienen zwei an sich bekannte Ultraschallwandler-Arrays, die jeweils als Lineararrays ausgebildet sind und jeweils n längs einer linearen Anordnungsrichtung nebeneinander angeordnete Ultraschallwandler umfassen. Beide Ultraschallwandler-Arrays werden an einer Oberfläche einer zu untersuchenden dünnwandigen Struktur, die eben oder gekrümmt plattenförmig oder in Form einer hohlzylindrischen Struktur ausgebildet sein kann, mit jeweils parallel zueinander orientierten Anordnungsrichtungen angeordnet, wobei beide Ultraschallwandler-Arrays relativ zu beiden Anordnungsrichtungen einen orthogonalen Abstand zueinander einschließen, der einen Strukturbereich definiert, der einer Fehleranalyse im Wege einer zerstörungsfreien Prüfung auf Basis einer tomographischen Ultraschallwellenanalyse zugrunde gelegt wird.

Zur Erzeugung von geführten Ultraschallwellen innerhalb der dünnwandigen Struktur formen sich die mittels der Ultraschallwandleranordnung eingekoppelten, freien Ultraschallwellen aufgrund der vorherrschenden strukturellen Rahmenbedingungen in geführte Ultraschallwellen um, deren Wellenlänge und Frequenz separat einstellbar sind und jeweils einen sogenannten Arbeitspunkt definieren.

Die Grundlage der zerstörungsfreien Prüfung bilden wenigstens von Seiten eines Ultraschallwandler-Arrays in die dünnwandige Struktur eingekoppelte geführte Ultraschallwellen, die in Form von längs des gegenseitigen Abstandes beider Ultraschallwandler-Arrays transmittierter Ultraschallwellenanteile und/oder in Form innerhalb der durchschallten dünnwandigen Struktur reflektierter Ultraschallwellenanteile empfangen und der weiteren Auswertung zugrundegelegt werden.

Zum Zwecke der Ultraschallwelleneinkopplung in die dünnwandige Struktur können sämtliche Ultraschallwandler jeweils eines Ultraschallwandler-Arrays gleichzeitig oder in zeitlicher Abfolge aktiviert werden. Der Empfang der transmittierten und/oder reflektierten Ultraschallwellenanteile erfolgt zeitaufgelöst unter Zugrundelegung des jeweiligen zeitlichen Einschallungsereignisses, wobei am Ort eines jeden Ultraschallwellen empfangenden Ultraschallwandlers die Ultraschallwellenamplitude als zeitaufgelöstes Ultraschallsignal der weiteren Signalauswertung zugrunde gelegt wird.

So werden zum Zwecke der Rekonstruktion von innerhalb des zu untersuchenden Strukturbereiches vorhandenen Struktur- bzw. Materialdefekten zumindest die detektierten Ultraschallwellenamplituden, durch die auf das Dämpfungsverhalten der zu untersuchenden Struktur geschlossen werden kann, sowie auch die Ultraschalllaufzeiten zugrunde gelegt. Aus letzteren können insbesondere die Anteile der Phasengeschwindigkeit sowie auch der Gruppengeschwindigkeit der jeweils detektierten Ultraschallwellen ausgewertet und der Rekonstruktion zugrunde gelegt werden. Die Phasengeschwindigkeiten ergeben sich jeweils aus den Phasenlagen der hochfrequenten Ultraschallsignalanteile, wohingegen die Gruppengeschwindigkeiten aus der Lage der sog. Einhüllenden des Ultraschallsignals ableitbar sind. Bereits auf Basis der vorstehenden Ultraschallsignalauswertung können unter Zugrundelegung computertomographischer Auswertealgorithmen, die dem Fachmann an sich bekannt sind, erste Ergebnisse hinsichtlich der Bestimmung von Form, Lage und Größe von in der Struktur vorhandenen Fehlern innerhalb der dünnwandigen Struktur erhalten werden, wie dies bis anhin in bekannter Weise praktiziert wird.

Die im Rahmen der vorstehend erläuterten Ultraschallwellendurchschallung der dünnwandigen Struktur gewonnenen Erkenntnissen dienen lösungsgemäß als Vorinformationen, d. h. als sog. a priori Informationen, die lösungsgemäß mit weiteren Erkenntnissen, die im Rahmen wenigstens einer weiteren Ultraschallwellendurchschallung der dünnwandigen Struktur gewonnen werden, einem Rekonstruktionsprozess zugrunde gelegt werden, um die Rekonstruktionsgenauigkeit zu verbessern.

So werden in wenigstens einem weiteren Durchschallungsprozess geführte Ultraschallwellen in die Struktur eingekoppelt, die sich in wenigstens zwei Wellencharakteristika von den vorgehend eingekoppelten Ultraschallwellen unterscheiden, bspw. hinsichtlich ihres Ultraschallwellentyps sowie deren Wellenlänge und/oder ihres Wellenlängenmodes. Wurden bspw. bei der erste Durchschallung Lambwellen mit einer ersten Wellenlänge in die dünnwandige Struktur eingekoppelt bzw. entsprechend angeregt, so gilt es im darauffolgenden Durchschallungsvorgang bspw. geführte SH-Wellen bzw. Rayleighwellen mit einer zweiten Wellenlänge einzukoppeln, die über andere Wechselwirkungseigenschaften mit der dünnwandigen Struktur verfügen als Lambwellen. Hierzu bedarf es einer kombinierten Ultraschallwandler-Array-Anordnung, die sowohl Wandlertypen zu Erzeugung von Lambwellen als auch Wandlertypen zur Erzeugung von SH-Wellen umfasst und jeweils bei unterschiedlichen Arbeitspunkten betreibbar sind.

Der Fehlrekonstruktion werden nun zwei unterschiedliche Ultraschallsignaldatensätze von ein und derselben Struktur zugrundegelegt, die die Wechselwirkungseigenschaften der Struktur mit jeweils zwei unterschiedlichen Ultraschallwellentypen mit unterschiedlichen Wellenlängen und/oder Frequenzen beinhalten und deren Auswertung auf der Basis tomographischer Auswertealgorithmen eine signifikant bessere Aussagequalität über Form, Größe und Fehlerart von in der Struktur enthaltenen Fehlern ermöglicht.

Selbstverständlich können weitere Durchschallungen der Struktur mit weiteren unterschiedlichen Ultraschallwellentypen zum Zwecke der Ultraschallsignal-Datengewinnung durchgeführt werden, die einer nachfolgenden Fehlerrekonstruktion gesamtheitlich zugrunde gelegt werden.

Alternativ oder in Kombination zur Einschallung unterschiedlicher Ultraschallwellentypen eignet es sich ebenso der Fehlerrekonstruktion Ultraschallsignaldaten zugrunde zu legen, die nicht von Ultraschallwellen von unterschiedlichem Wellentyp, sondern mit unterschiedlichen Ultraschallwellenmoden mit unterschiedlichen Ultraschallwellenlängen herrühren. So bietet es sich bspw. an die dünnwandige Struktur in einem ersten Durchschallungsvorgang mit A0-Mode-Lambwellen einer ersten Wellenlänge zu durchschallen, deren Detektion zu einem ersten Ultraschallsignaldatensatz führt. In einem zweiten, darauffolgenden Durchschallungsvorgang wird die dünnwandige Struktur mit S0-Mode-Lambwellen bspw. der doppelten Wellenlänge durchschallt, deren Detektion zu einem zweiten Ultraschallsignaldatensatz führt. Zu Zwecken einer aussagekräftigen quantitativen Fehlerbestimmung werden beide Ultraschallwellendatensätze der Fehlerrekonstruktion unter Verwendung tomographischer Auswertealgorithmen zugrunde gelegt.

Selbstverständlich ist es möglich weitere Durchschallungen bspw. mit Lambwellen unterschiedlichster Moden mit dreifacher, vierfacher, fünffacher etc. Wellenlänge vorzunehmen, um auf diese Weise eine Vielzahl unterschiedlicher Ultraschallsignal-Datensätze zu generieren, die zu Zwecken der Genauigkeitssteigerung der Fehlerkonstruktion zugrunde gelegt werden kann.

In einer weiteren bevorzugten Ausführungsform des lösungsgemäßen Verfahrens, die alternativ oder in Kombination mit den vorstehend erläuterten Verfahrensvarianten durchgeführt werden kann, werden wenigstens zwei Durchschallungen der dünnwandigen Struktur vorgenommen, bei denen sich die eingekoppelten bzw. eingeschalteten Ultraschallwellen hinsichtlich ihrer Schwingungsmoden bzw. Ultraschallmoden sowie Frequenzen unterscheiden. Auch die Anzahl von Ultraschallwellendurchschallungen mit jeweils unterschiedlichen Ultraschallmoden kann beliebig gewählt werden, wodurch entsprechend viele unterschiedliche Ultraschallsignal-Datensätzen gewonnen werden können, die einer nachfolgenden Auswertung zugrunde zu legen sind.

Das lösungsgemäße Verfahren eröffnet einen großen Variantenreichtum zur Generierung unterschiedlicher Ultraschallsignal-Datensätze von ein und derselben dünnwandigen Struktur.

Neben den vorstehend erwähnten Ultraschallwelleneigenschaften in Bezug auf Wellentyp, Wellenlänge und Wellenmode, die es jeweils gilt in aufeinanderfolgenden Durchschallungsvorgängen in der vorbeschriebenen Weise zu variieren, dient als weiterer Freiheitsgrad zur Variation der Durchschallung die Art der Detektion, d. h. es können sowohl transmittierende Ultraschallwellenanteile detektiert werden als auch reflektierende Ultraschallwellenanteile, die jeweils von identisch eingeschallten Ultraschallwellen herrühren. So wechselwirkt ein und dieselbe Ultraschallwelle mit einem Raumpunkt innerhalb der Struktur in jeweils unterschiedlicher Weise hinsichtlich Transmission und Reflektion.

So sieht eine lösungsgemäße Verfahrensvariante eine kombinierte Signalauswertung vor, bei der bspw. im Rahmen einer ersten Durchschallung ausschließlich transmittierte Ultraschallwellenanteile detektiert werden, die zu einem ersten Ultraschallsignaldatensatz zusammengefasst werden, wohingegen in einer zweiten Durchschallung ausschließlich reflektierte Ultraschallwellenanteile erfasst werden, die im Rahmen eines zweiten Ultraschallsignal-Datensatzes abgespeichert werden. In beiden Durchschallungen werden ansonsten unveränderte Ultraschallwellen in die dünnwandige Struktur eingekoppelt. In lösungsgemäßer Weise werden zu Zwecken der Fehlerrekonstruktion beide Ultraschallsignal-Datensätze der Fehlerauswertung zugrunde gelegt.

Grundsätzlich führt die lösungsgemäße Durchführung wenigstens zweier, vorzugsweise vieler Durchschallungsvorgänge, bei denen Ultraschallwellen in einer zu inspizierenden Struktur eingeschallt werden, die sich jeweils durch wenigstens zwei Wellencharakteristika, nämlich Wellentyp, Wellenlänge, Wellenmode, und/oder der Art der Wechselwirkung mit der Struktur, nämlich im Wege einer Transmission oder Reflektion, unterscheiden, zu einer große Menge an Informationen, die zur Rekonstruktion genutzt werden, wodurch eine bessere und genauere Fehlerrekonstruktion möglich wird.

### Bezugszeichenliste

- 1: Ultraschallwandler-Array
- 2: Ultraschallwandler-Array
- a: Abstand
- P: Raumpunkt
- M: Mantelfläche
- R: Rohrleitung
- F: Fehler
- a,...h: Ultraschallwandler
- a',...h': Ultraschallwandler
- U: Umfangsrichtung

## Patentansprüche

1. Verfahren zur zerstörungsfreien Prüfung einer dünnwandigen Struktur auf Basis einer tomographischen Ultraschallwellenanalyse, bei dem an die dünnwandige Struktur zwei Ultraschallwandler-Arrays in einem Abstand zueinander zum Aussenden und Empfangen von geführten Ultraschallwellen längs der dünnwandigen Struktur angeordnet werden und mit denen die Struktur durchschallt und transmittierende Ultraschallwellenanteile erfasst werden, auf deren Grundlage eine Prüfinformation von der dünnwandigen Struktur rekonstruiert wird,
**dadurch gekennzeichnet, dass** in einem ersten Durchschallungsvorgang die Struktur mit geführten Ultraschallwellen wenigstens einer ersten Art durchschallt wird und die Struktur transmittierende und/oder in der Struktur reflektierende geführten Ultraschallwellenanteile bezüglich ihrer Phasen- und Gruppengeschwindigkeiten und/oder Amplitude detektiert werden,
dass in einem zweiten Durchschallungsvorgang die Struktur mit geführten Ultraschallwellen wenigstens einer zweiten Art durchschallt wird und die Struktur transmittierende und/oder in der Struktur reflektierende Ultraschallwellenanteile bezüglich ihrer Phasen- und Gruppengeschwindigkeiten und/oder Amplitude detektiert werden,
dass die Phasen- und Gruppengeschwindigkeiten und/oder Amplituden der detektierten Ultraschallwellenanteile der geführten Ultraschallwellen der wenigstens ersten und zweiten Art der Rekonstruktion zugrunde gelegt werden, und
dass sich die geführten Ultraschallwellen der wenigstens ersten und zweiten Art in wenigstens zwei der nachfolgenden Eigenschaften unterscheiden: Wellenlänge, Frequenz, Wellentyp, Wellenmode.

2. Verfahren nach Anspruch 1,
**dadurch gekennzeichnet, dass** die zwei Ultraschallwandler-Arrays als Lineararrays ausgebildet werden, umfassend jeweils n längs einer linearen Anordnungsrichtung, nebeneinander angeordnete Ultraschallwandler, mit jeweils parallel zueinander orientierten Anordnungsrichtungen,
dass die zwei Ultraschallwandler-Arrays in einem zu beiden Anordnungsrichtungen orthogonalen Abstand längs der dünnwandigen Struktur angeordnet werden, und dass die von jedem Ultraschallwandler in die dünnwandige Struktur eingekoppelten geführten Ultraschallwelle anteilsmäßig von allen übrigen Ultraschallwandlern entweder in Form einer die dünnwandige Struktur transmittierten Ultraschallwelle und/oder in Form einer in der dünnwandigen Struktur reflektierten Ultraschallwelle empfangen werden.

3. Verfahren nach Anspruch 1 oder 2,
**dadurch gekennzeichnet, dass** der erste und zweite Durchschallungsvorgang gleichzeitig oder zeitlich getrennt durchgeführt werden.

4. Verfahren nach einem der Ansprüche 1 bis 3,
**dadurch gekennzeichnet, dass** als unterschiedlicher Wellentyp Lamb Wellen, Rayleigh-Wellen und geführte SH-Wellen erzeugt und empfangen werden.
